Europäisches Patentamt

European Patent Office

Office européen des brevets

(11) Veröffentlichungsnummer: **0 178 541**
**B1**

(12) EUROPÄISCHE PATENTSCHRIFT

(45) Veröffentlichungstag der Patentschrift: **16.05.90**

(21) Anmeldenummer: **85112501.3**

(22) Anmeldetag: **03.10.85**

(51) Int. Cl.⁵: **G 07 C 5/06, G 07 C 5/12**

(54) Fahrtschreiber.

(30) Priorität: **17.10.84 DE 3437984**

(43) Veröffentlichungstag der Anmeldung:
**23.04.86 Patentblatt 86/17**

(45) Bekanntmachung des Hinweises auf die
Patenterteilung:
**16.05.90 Patentblatt 90/20**

(84) Benannte Vertragsstaaten:
**DE FR GB IT**

(56) Entgegenhaltungen:
**DE-A-2 026 513
DE-A-3 247 910
GB-A-1 404 070**

(73) Patentinhaber: **Mannesmann Kienzle GmbH
Heinrich-Hertz-Strasse
D-7730 Villingen-Schwenningen (DE)**

(72) Erfinder: **Bertsch, Ulrich
Steig 16
D-7732 Niedereschach (DE)**
Erfinder: **Fichter, Manfred
Aigenstrasse 8
D-7744 Königsfeld (DE)**
Erfinder: **Jauch, Günther
Tübinger Strasse 7
D-7730 Villinge-Schwenningen (DE)**
Erfinder: **Krickl, Josef
Erlenweg 16
D-7737 Bad Dürrheim 3 (DE)**
Erfinder: **Lais, Norbert
Lehrenstrasse 10
D-7737 Bad Dürrheim 5 (DE)**
Erfinder: **Silbersdorf, Volker
Ludwigstrasse 10a
D-7737 Bad Dürrheim (DE)**
Erfinder: **Weber, Robert
Alemannenstrasse 20
D-7734 Brigachtal (DE)**

Courier Press, Leamington Spa, England.

**Beschreibung**

Die Erfindung betrifft einen Fahrtschreiber mit einem elektrisch gesteuerten, dem Antrieb wenigstens eines Aufzeichnungsträgers dienenden Laufwerk, mit wenigstens einem mit dem Aufzeichnungsträger zusammenwirkenden Registrierorgan, welches zur Bildung von Aufzeichnungen guer zur Transportrichtung des Aufzeichnungsträgers ebenfalls elektrisch steuerbar ist und mit einer Einrichtung, die einen Ausfall der Betriebsspannung des Fahrtschreibers zu dokumentieren gestattet.

Bekanntlich besitzen die in Fahrtschreibern für Kraftfahrzeuge im allgemeinen als Aufzeichnungsträger verwendeten Diagrammscheiben insofern dokumentarischen Wert, als die auf ihnen aufgezeichneten Daten wesentlich zur Klärung von Unfallsituationen, zur Feststellung des Nutzungsgrades eines Fahrzeuges und als Arbeitszeitnachweis für die auf dem Fahrzeug tätigen Fahren dienen (s. z.B. GB-A-1 404 070). Zwangsläufig ergibt sich daraus einerseits die Gefahr, daß die Aufzeichnungen eines Fahrtschreibers in betrügerischer Absicht verändert werden bzw. versucht wird, die Aufzeichnungen nicht zustande kommen zu lassen, andererseits das Problem, Manipulationen nachzuweisen.

Eine der bekannten Kontrollmaßnahmen besteht darin, ein Öffnen des Fahrtschreibers durch eine nicht mehr rückgängig zu machende Markierung auf dem Aufzeichnungsträger zu kennzeichnen. Realisiert wurde dies beispielsweise dadurch, daß mittels einer geeigneten Einrichtung der Rand des Aufzeichnungsträgers beim Schließen des Fahrtschreibers eingeschnitten bzw. ausgestanzt oder daß mit einem zusätzlichen Registrierorgan eine Kontrollspur aufgezeichnet wurde. In neuerer Zeit hat man sich damit begnügt, daß die beim Schließen des Deckels durch Zurückdrücken der gefederten, für das Aufzeichnen von Geschwindigkeit, Weg und Arbeitszeiten bei herkömmlichen Fahrtschreibern ohnehin erforderlichen Schreibstifte zwangsweise entstehenden Anstriche als ausreichende Kennzeichnung angesehen wurden.

Ferner ist es üblich und auch gesetzlich vorgeschrieben zu kontrollieren, ob überhaupt eine Diagrammscheibe in den Fahrtschreiber eingelegt und dieser ordnungsgemäß verschlossen ist und ob wenigstens der die Arbeitszeiten aufzeichnende Schreibstift mit dem für eine befriedigende Aufzeichnung erforderlichen Schreibdruck auf der Diagrammscheibe aufliegt. Hierzu ist es bekannt, den Fahrtschreiber derart auszubilden, daß die Diagrammscheibe und die Aufzeichnungsstelle unmittelbar oder unter Verwendung optischer Hilfsmittel beobachtet werden kann. Andererseits sind zur Lösung dieser Aufgabe bereits verschiedene Kontakteinrichtungen und mit diesen zusammenwirkende Anzeigemittel vorgeschlagen und realisiert worden.

Eine weitere, an sich altbekannte Kontrollmaßnahme besteht darin, eine Laufwerksanzeige vorzusehen, und zwar entweder mit einem zusätzlichen Anzeigeorgan (Tel-Tel-Scheibe), mit einer dem Laufwerksmotor zugeordneten Kontaktanordnung oder in einfacher Weise mit einem Sekundenzeiger bzw. einem äquivalenten, auf der Sekundenzeigerwelle angeordneten Anzeigeorgan.

Mit diesen bekannten Kontrollmaßnahmen sind bei heutigen Fahrtschreibern, die im allgemeinen motorisch betätigte Laufwerke für Zeitanzeige und Diagrammscheibenantrieb aufweisen, die Aufzeichnungen nur sehr bedingt daraufhin überprüfbar, ob sie tatsächlich uhrzeitrichtig aufgezeichnet oder manipuliert worden sind.

Im Gegensatz zu früher üblichen Fahrtschreibern mit einem rein mechanischen Laufwerk für den Transport der Aufzeichnungsträger, die in Verbindung mit einem Rüttelpendel eine weitgehend "unbestechliche" Kontrolleinrichtung darstellten (DE-A-2 026 513), sind Fahrtschreiber mit elektrischen Antrieben für den Transport der Aufzeichnungsträger auf relativ einfache Weise, nämlich durch Unterbrechen der Betriebsspannung des Fahrtschreibers, stör- bzw. manipulierbar. Dabei sind es nicht so sehr Schwarzfahrten, die in diesem Zusammenhang interessant sind, sondern die beispielsweise auch durch mehrfaches, kurzzeitiges Stillsetzen des Transports des Aufzeichnungsträgers erzielbare Lenkzeitraffung, die es ermöglicht, die gesetzlich vorgeschriebenen Arbeitszeiten überschreiten zu können. Hierbei handelt es sich um einen der häufigsten Verstöße im Speditionsbetrieb bzw. Transportgeschäft, was an sich verständlich ist, weil für den Spediteur oder den Busunternehmer im allgemeinen die zügige Abwicklung eines Transportauftrages im Vordergrund steht.

Man hat sich hierfür auch recht subtile Manipulationspraktiken einfallen lassen, die während der Fahrt wirksam sind und die beim Betrachten des Aufzeichnungsträgers nicht erkannt werden können. Eine dieser Maßnahmen ist es, die Betriebsspannung des Fahrtschreibers unter Verwendung eines Impulsgebers, beispielsweise des Blinkgebers oder des Scheibenwischer-Intervallgebers, impulsweise kurzzeitig zu unterbrechen.

Ziel der vorliegenden Erfindung war es, Ausfälle der Betriebsspannung eines Fahrtschreibers mit möglichst geringem Aufwand nachweisbar zu machen.

Die Lösung dieser Aufgabe sieht vor, daß eine bistabile Kippstufe vorgesehen ist, deren einer Eingang über eine Verzögerungsschaltung mit einem die Betriebsspannung führenden Leiter verbunden ist, daß der Ausgang der bistabilen Kippstufe mit der Steuerschaltung des Registrierogans verbunden ist und daß dem Registrierorgan ein in einer Verbindung zwischen Nullpotential der Betriebsspannung und dem anderen Eingang der bistabilen Kippstufe liegender Schalter zugeordnet ist.

Eine vorteilhafte Ergänzung der erfindungsgemäßen Lösung ist dadurch gekennzeichnet, daß dem mit dem Schalter verbundenen Eingang der bistabilen Kippstufe wenigstens ein weiterer, mit einem Betriebsspannung führenden Leiter verbunden er und als Registrierkontrollorgan dienender Schalter zugeordnet ist.

Ein bevorzugtes Ausführungsbeispiel sieht vor, daß der Fahrtschreiber zum Messen, Anzeigen und Aufzeichnen von Geschwindigkeiten mit einem Nachlaufsystem ausgerüstet ist, daß der Ausgang der bistabilen Kippstufe mit dem Eingang der Integrationsstufe des Nachlaufsystems verknüpft ist und daß der Schalter einem das Geschwindigkeitsregistrierorgan tragenden und von einem Stellmotor angetriebenen Schlitten zugeordnet ist.

Der Vorteil, den die erfindungsgemäße Lösung bietet, ist vor allem darin zu sehen, daß mit einem relativ geringen Aufwand, beispielsweise unter Verwendung der Diagrammscheibe und des ohnehin vorhandenen Geschwindigkeitsregistrierorgans und dessen Steuerungsmittel, indem eine fahrtuntypische Registrierung erfolgt, deutlich sichtbar und letzten Endes auch maschinell auswertbar dokumentiert werden kann, daß die Betriebsspannung des Fahrtschreibers unterbrochen war.

Der Vollständigkeit halber sei aber auch erwähnt, daß für eine diesbezügliche Markierung ein zusätzliches, beispielsweise am äußeren Rand der Diagrammscheibe wirksames Registrierorgan vorgesehen sein kann, daß ferner Mittel vorgesehen sein können, die für eine bestimmte Dauer eine oszillierende Bewegung des Registrierorgans bewirken und somit eine Markierung mit Signalwirkung erzeugen und daß die Erfindung auch bei einem statischen Registrierorgan, beispielsweise einem Thermokamm, anwendbar ist, indem nach einem Durchtakten des Registrierbereiches eine Schalt- und Rücksetzfunktion ausgelöst wird.

Im folgenden sei die Erfindung anhand der beigefügten Zeichnungen näher erläutert: Es zeigen

FIG. 1 eine schematische Darstellung des bevorzugten Ausführungsbeispieles,

FIG. 2 eine spezielle Schaltung zur Einschalterkennung und Speicherung des Einschaltereignisses nach einem Ausfall der Betriebsspannung.

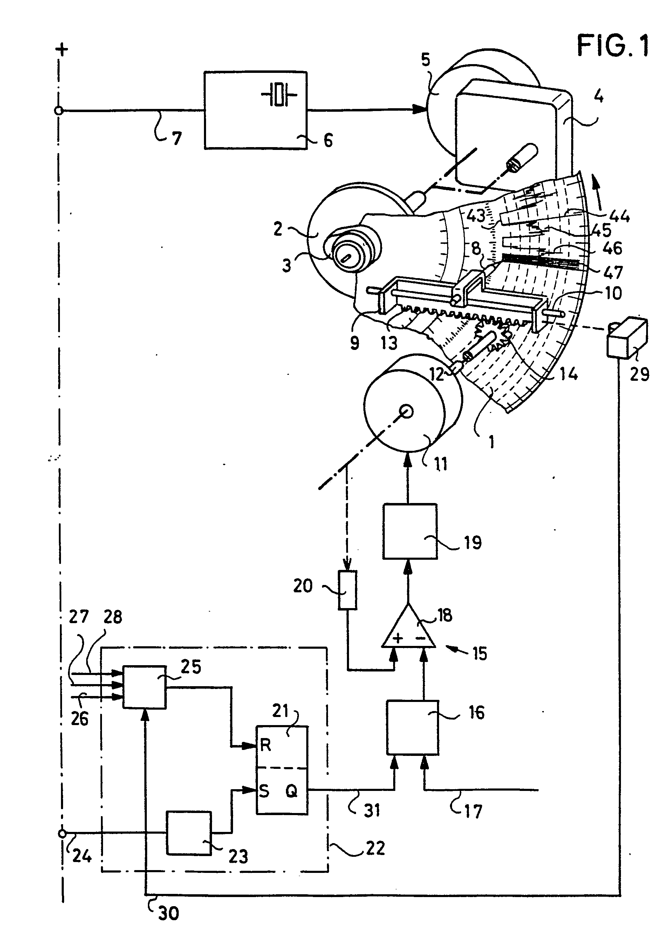

Wie die FIG. 1 zeigt, ist in an sich üblicher Weise eine als Aufzeichnungsträger dienende Diagrammscheibe 1, von der lediglich ein Ausschnitt dargestellt ist, auf einem an einer Auflage 2 ausgebildeten Zentrier- und Mitnahmedorn 3 aufgenommen und wird unter Zwischenschaltung eines Getriebes 4 von einem Motor 5 in Pfeilrichtung uhrzeitrichtig angetrieben. Den Motor 5 steuert ein Uhrenbaustein 6, dem über eine Leitung 7 die Betriebsspannung zugeführt wird. Ein auf der Diagrammscheibe 1 aufliegender Schreibstift 8 — es handelt sich um den Geschwindigkeitsschreibstift des Fahrtschreibers — ist gefedert gelagert an einem Schlitten 9 angeordnet, welcher seinerseits auf einer Führungsstange 10 quer zur Transportrichtung der Diagrammscheibe 1 verschiebbar geführt ist.

Angetrieben wird der Schlitten 9 von einem Stellmotor 11, auf dessen Welle 12 ein mit einer am Schlitten 9 ausgebildeten Verzahnung 13 in Eingriff stehendes Zahnrad 14 befestigt ist. Der Stellmotor 11 bildet das Stellglied eines der Geschwindigkeitsmessung dienenden Nachlaufsystems 15 des Fahrtschreibers, dessen Integrationsstufe 16 in an sich bekannter Weise über eine Leitung 17 drehzahl-weg-angepaßte, geschwindigkeitsproportionale Impulse zugeführt werden. Mit 18 ist eine Vergleichsschaltung des Nachlaufsystems 15 bezeichnet, während 19 eine dem Stellmotor 11 zugeordnete Steuer- und Verstärkerschaltung darstellt. Der auf die Vergleichsschaltung 18 rückgeführte Ist-Wert des Stellmotors 11 wird mittels eines Potentiometers, das mit 20 bezeichnet ist, in eine elektrische Größe umgeformt.

Wie die FIG. 1 ferner zeigt, ist diesem an sich üblichen Meß- und Registriersystem eine eine bistabile Kippstufe 21 aufweisende Erkennungsschaltung 22 zugeordnet, deren Setzeingang S über eine Verzögerungsschaltung 23 und eine Leitung 24 an einem die Betriebsspannung führenden Leiter liegt, während dem Rücksetzeingang R eine Verknüpfung 25 von mehreren von Registrierkontrollorganen ausgehenden Leitungen 26, 27 und 28 und einer von einem dem Schlitten 9 zugeordneten Schalter 29 ausgehenden Leitung 30 zugeordnet ist. Der Ausgang Q der bistabilen Kippstufe 21 und damit der Erkennungsschaltung 22 ist über die Leitung 31 mit der Integrationsschaltung 16 verbunden und steuert, wenn er positives Potential führt, den Stellmotor 11 in eine Endposition.

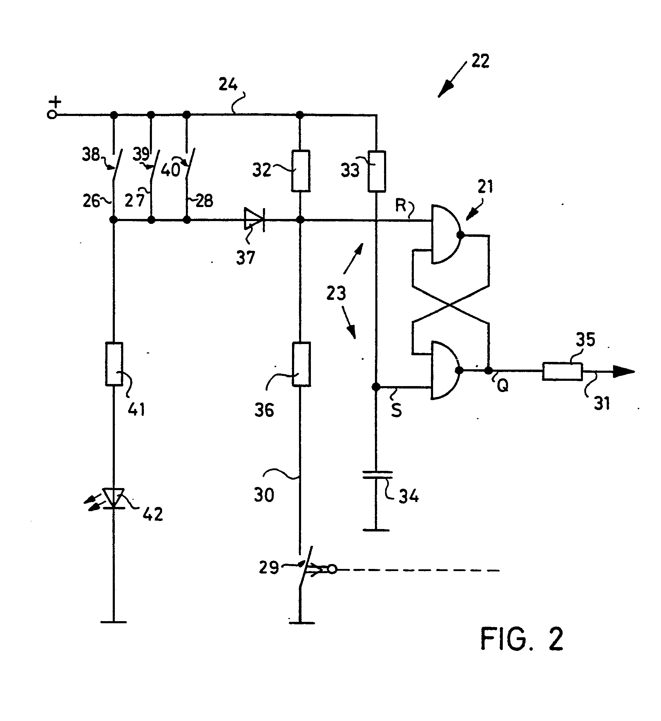

Die Erkennungsschaltung 22 ist in FIG. 2 im einzelnen näher erläutert. Dabei wird über die Eingangsbeschaltung der bistabilen Kippstufe 21 bei einem Einschaltvorgang nach vorhergehender Abschaltung bzw. nach einem Ausfall der Betriebsspannung der Rücksetzeingang R über einen Widerstand 32 definiert auf positives Potential gelegt, während der Setzeingang S über die die Verzögerungsschaltung 23 bildende RC-Kombination 33 und 34 zunächst auf Null-Potential bleibt und somit der Ausgang Q über einen Widerstand 35 und die Leitung 31 ein positives Signal liefert, welches nach dem Aufladen des Kondensators 34 und somit dem Setzen der bistabilen Kippstufe 21 erhalten bleibt und den Stellmotor 11 derart steuert, daß er den Schlitten 9 vorzugsweise in eine in bezug auf das Geschwindigkeitsregistrierfeld der Diagrammscheibe 1 äußerste Stellung bewegt. In dieser Stellung betätigt der Schlitten 9 den Schalter 29, der, wie aus FIG. 2 weiter ersichtlich ist, über einen Widerstand 36 die bistabile Kippstufe 21 rücksetzt, wenn alle über eine Diode 37 ebenfalls mit dem Rücksetzeingang R der bistabilen Kippstufe 21 verknüpften, als Registrierkontrollorgane dienenden Schalter 38, 39 und 40 ordnungsgemäße Funktion signalisieren, in diesem Falle geöffnet sind, d.h. daß der Deckel des Fahrtschreibers geschlossen ist, daß eine Diagrammscheibe eingelegt ist und daß wenigstens ein Schreibstift sich in Registrierposition befindet. Den Schaltern 38, 39 und 40 ist in an sich üblicher Weise über einen Widerstand 41 eine Leuchtdiode 42 zugeordnet, die dazu dient, eine Fehlfunktion der Aufzeichnungsorgane an der Frontseite des Fahrtschreibers anzuzeigen.

Das Aufzeichnungsbeispiel in FIG. 1 zeigt in einem ersten Abschnitt, daß nach einer Nullinienaufzeichnung 43 — das Fahrzeug stand still — eine einen Ausfall der Betriebsspannung bzw. ein Wiederanschließen des Fahrtschreibers an die Betriebsspannung dokumentierende Markierung, nämlich eine radiale Linie 44, über das gesamte Geschwindigkeitsregistrierfeld aufgezeichnet worden und dann die normale Geschwindigkeitsaufzeichnung 45 erfolgt ist. Das bedeutet, daß während des Fahrzeugstillstandes eine Unterbrechung der Betriebsspannung erfolgt ist, die unmittelbar vor Antritt einer Fahrt beseitigt wurde. Dazwischen könnte beispielsweise eine Schwarzfahrt unbekannter Dauer unternommen worden sein. In einem zweiten Abschnitt des Aufzeichnungsbeispiels werden während eines normalen Fahrtverlaufs 46 eine Schar radialer Linien 47 aufgezeichnet, woraus geschlossen werden kann, daß die erfolgte Betriebsspannungsunterbrechung durch einen beispielsweise vom Fahrerhaus einschaltbaren Taktgeber ausgelöst worden sind, um ganz speziell Lenkzeit zu raffen.

## Patentansprüche

1. Fahrtschreiber mit einem elektrisch gesteuerten, dem Antrieb wenigstens eines Aufzeichnungsträgers (1) dienenden Laufwerk (2-5), mit wenigstens einem mit dem Aufzeichnungsträger (1) zusammenwirkenden Registrierorgan (8-10), welches zur Bildung von Aufzeichnungen quer zur Transportrichtung des Aufzeichnungsträgers (1) ebenfalls elektrisch steuerbar (15-20) ist und mit einer Einrichtung (22), die einen Ausfall der Betriebsspannung (+) des Fahrtschreibers zu dokumentieren gestattet,
dadurch gekennzeichnet,
daß eine bistabile Kippstufe (21) vorgesehen ist, deren einer Eingang (S) über eine Verzögerungsschaltung (23) mit einem die Betriebsspannung (+) führenden Leiter (24) verbunden ist,
daß der Ausgang (Q) der bistabilen Kippstufe (21) mit der Steuerschaltung (19) des Registrierorgans (8-10) verbunden ist und
daß dem Registrierorgan (8-10) ein in einer Verbindung (30) zwischen Null-Potential der Betriebsspannung und dem anderen Eingang (R) der bistabilen Kippstufe (21) liegender Schalter (29) zugeordnet ist.

2. Fahrtschreiber nach Anspruch 1, dadurch gekennzeichnet, daß dem mit dem Schalter (29) verbundenen Eingang (R) der bistabilen Kippstufe (21) wenigstens ein weiterer, mit einem Betriebsspannung führenden Leiter verbundener und als Registrierkontrollorgan dienender Schalter (z. B. 40) zugeordnet ist.

3. Fahrtschreiber nach Anspruch 1, dadurch gekennzeichnet, daß er zum Messen, Anzeigen und Aufzeichnen von Geschwindigkeiten mit einem Nachlaufsystem (15) ausgerüstet ist,
daß der Ausgang der bistabilen Kippstufe (21) mit dem Eingang der Integrationsstufe (16) des Nachlaufsystems (15) verknüpft ist und
daß der Schalter (29) einem das Geschwindigkeitsregistrierorgan (8) tragenden und von einem Stellmotor (11) angetriebenen Schlitten (9) zugeordnet ist.

## Revendications

1. Enregistreur de route avec un mécanisme d'entraînement (2-5) à commande électrique servant à l'entraînement d'au moins un support d'enregistrement (1), avec au moins, coopérant avec le support d'enregistrement (1), un organe enregistreur (8-10) lequel, pour la réalisation d'enregistrements, peut être déplacé, également par voie électrique (15-20), transversalement au sens de transport du support d'enregistrement (1) et avec un dispositif (22) qui permet de documenter une défaillance de la tension de service (+) de l'enregistreur de route,
caractérisé par le fait
qu'il est prévu un circuit bascule bistable (21) dont l'une des entrées (S) est reliée, par l'intermédiaire d'un montage de temporisation (23), à un conducteur (24) acheminant la tension de service (+),
que la sortie (Q) du circuit bascule bistable (21) est reliée au circuit de commande (19) de l'organe enregistreur (8-10) et
qu'à l'organe enregistreur (8-10) est associé un interrupteur (29) inséré dans une liaison (30) entre le potentiel zéro de la tension de service et l'autre entrée (R) du circuit bascule bistable (21).

2. Enregistreur de route selon la revendication 1, caractérisé par le fait qu'à l'entrée (R) du circuit bascule bistable (21) reliée à l'interrupteur (29) est associée au moins un interrupteur (par exemple 40) servant d'organe de contrôle d'enregistrement et étant relié à un conducteur acheminant la tension de service.

3. Enregistreur de route selon la revendication 1, caractérise, par le fait qu'il est équipé, pour la mesure, l'affichage et l'enregistrement de vitesses, d'un système d'asservissement (15),
que la sortie du circuit bascule bistable (21) est enchaînée avec l'entrée de l'étage d'intégration (16) du système d'asservissement (15) et
que l'interrupteur (29) est associé à un chariot (9) qui porte l'organe enregistreur de vitesse (8) et qui est entraîné par un servomoteur (11).

## Claims

1. Tachograph with an electrically controlled drive assembly (2-5) serving for the drive of at least one recording support (1), with at least one recording member (8-10) co-operating with the recording support (1), which recording member for the formation of recordings can likewise be controlled electrically (15-20) transversely to the conveying direction of the recording support (1) and with a device (22), which makes it possible to document a failure of the operating voltage (+) of the tachograph, characterised in that a bistable flip-flop (21) is provided, whereof one input (S) is connected by way of a time lag circuit (23) to a lead (24) carrying the operating voltage (+), that the output (Q) of the bistable flip-flop (21) is connected to the control circuit (19) of the recording member (8-10) and that associated with the recording member (8-10) is a switch (29) located in a connection (30) between zero potential of the operating voltage and the other input (R) of the bistable flip-flop (21).

2. Tachograph according to Claim 1, characterised in that associated with the input (R) of the bistable flip-flop (21) connected to the switch (29) is at least one further switch (for example 40) connected to a lead carrying operating voltage and serving as a recording control member.

3. Tachograph according to Claim 1, characterised in that for measuring, indicating and recording speeds it is equipped with a follow-up system (15), that the output of the bistable flip-flop (21) is connected to the input of the integration stage (16) of the follow-up system (15) and that the switch (29) is associated with a carriage (9) supporting the speed-recording member (8) and driven by a servo motor (11).

FIG.1

EP 0 178 541 B1

FIG. 2

2